# EUROPÄISCHE PATENTANMELDUNG

(11) **EP 0 678 727 A2**
(43) Veröffentlichungstag der Anmeldung: **25.10.1995**
(21) Anmeldenummer: 95104782.8
(22) Anmeldetag: 31.03.1995
(51) Int. Cl.: G01B 7/14

(54) **Magnetischer Wegsensor zum berührungslosen Erfassen des Abstandes zwischen zwei Bauteilen**

(30) Priorität: 18.04.1994 DE 4413341
(71) Anmelder: Continental Aktiengesellschaft, D-30165 Hannover (DE)
(72) Erfinder: Schneider, Eckhard, Dr., D-31275 Lehrte (DE); Diekmann, Hans-Jürgen, D-30159 Hannover (DE)

(57) **Zusammenfassung**

Eine Meßeinrichtung mit einem Magnetfeldsensor ist zum berührungslosen Erfassen des Abstandes zwischen zwei relativ zueinander beweglichen Bauteilen angeordnet. Um mit einem geringen technischen Aufwand eine weitgehend störungsfreie Signalgewinnung zu erzielen, weist ein Bauteil (22) mindestens einen Magneten (25) auf. Das andere Bauteil (23) weist den Magnetfeldsensor (28) auf, der von einer Magnetanordnung (27) umgeben und asymmetrisch zu dieser angeordnet ist. Dabei ist der Magnetfeldsensor (28) oberhalb der Austrittsebene (E) der Feldlinien der Magnetanordnung (27) angeordnet. Die vom Magnetfeldsensor (28) erfaßten Änderungen des Magnetfeldes werden in einer Signalverarbeitung (31, 32) in ein proportionales elektrisches Steuersignal umgewandelt.

## Beschreibung

Die Erfindung betrifft eine Meßeinrichtung mit einem Magnetfeldsensor zum berührungslosen Erfassen des Abstandes zwischen zwei relativ zueinander beweglichen Bauteilen.

Im Kraftfahrzeugbau besteht das Bedürfnis, bewegliche Teile zu sensieren, um z.B. den jeweiligen Abstand zwischen Achskörper und Fahrzeugaufbau zu erfassen. Dafür wird der Einsatz von Weg- bzw. Abstandssensoren notwendig. Der Sensor soll den Abstand zwischen den beiden Bezugspunkten möglichst berührungslos messen, um beeinflussungsfrei sensieren zu können.

Auch bei dem Einsatz von Luftfedern mit elastomeren Luftfederbälgen zur federnden Abstützung von Bauteilen werden Wegsensoren zur Höhenregelung der Luftfedern benötigt.

Es ist bekannt, die Höhenregelung zur Erzielung eines gleichen Fahrzeugniveaus bei unterschiedlichen Beladungszuständen mit einem elektronischen Höhensensor durch ein Paar gegenläufiger Kegelfedern im Innern eines Luftfederbalges einer Luftfeder zu bewirken. Die Kegelfedern werden beim Einfedern in axialer Richtung ausgelenkt. An einer der Anschlußplatten sind die Federn miteinander elektrisch verbunden. An der anderen Platte befindet sich die Auswerteelektronik und die Anschlüsse für die beiden anderen Federenden. Eine Änderung der Federlänge bewirkt eine entsprechende Änderung der Induktivität, die in ein Wegsignal umgeformt wird. Eine derartige Höhensensorik ist jedoch sehr aufwendig.

Der Erfindung liegt die Aufgabe zugrunde, einen berührungslosen Wegsensor zu schaffen, der sich durch einen geringeren technischen Aufwand und durch eine weitgehend störungsfreie Signalgewinnung auszeichnet.

Die Aufgabe wird erfindungsgemäß durch die im Kennzeichen des Anspruchs 1 genannten Merkmale gelöst.

Die gegeneinander relativ beweglichen Bauteile sind mit einem Aufbau von Magneten ausgestattet. Vorteilhafterweise werden diese Magnete auf separaten Einbauplatten angeordnet. Der Abstand zwischen den beiden Magnetanordnungen wird berührungsfrei durch den Magnetfeldsensor erfaßt, da durch den veränderlichen Abstand der Bauteile zueinander die Feldliniendichte stark verändert und dadurch der elektrische Zustand des Sensors beeinflußt wird.

In vorteilhafter Ausgestaltung der Erfindung besteht die den asymmetrischen Magnetfeldsensor umfassende Magnetanordnung aus einem geschlossenen Ring. Dadurch wird eine bessere Abschirmung des Magnetfeldsensors und eine höhere Magnetfeldliniendichte erreicht.

Die Erfindung betrifft auch eine Verwendung einer Meßeinrichtung gemäß Anspruch 1 zur berührungslosen Abstandssensierung zwischen Fahrzeugachse und Fahrzeugaufbau eines Kraftfahrzeuges. Der über die Änderung der Magnetfeldliniendichte beeinflußte Magnetfeldsensor eignet sich aufgrund seiner berührungslosen Sensierung gut für den rauhen Betrieb, dem Kraftfahrzeuge im Alltag unterworfen sind. Auch unter höchsten Beanspruchungen des Kraftfahrzeuges wird ein sicheres Abstandssignal über die magnetische Meßeinrichtung gewonnen, das dem jeweiligen Abstand zwischen Fahrzeugachse und Fahrzeugaufbau proportional ist.

Die Erfindung betrifft auch eine Verwendung der erfindungsgemäßen Meßeinrichtung zur berührungslosen Abstandssensierung der Anschlußteile eines elastomeren Luftfederbalges einer Luftfeder. Gegenüber bekannten Abstandssensierungen bei Luftfedern zeichnet sich die erfindungsgemäße Meßeinrichtung durch eine technisch einfachere Bauweise und sichere Signalgewinnung aus.

Eine weitere vorteilhafte Ausgestaltung der Erfindung wird im Kennzeichen des Anspruchs 5 offenbart. Die Anordnung der Magnete und des Magnetfeldsensors im Innenraum des Luftfederbalges an den Anschlußteilen schützt die Meßeinrichtung vor den Umgebungseinflüssen und verhindert beispielsweise Verschmutzungen. Weiter ist es vorteilhaft möglich, eine derart ausgebildete Luftfeder als ein bereits komplettiertes Bauteil zu handhaben und zu montieren.

Anhand der Zeichnung werden zwei Ausführungsbeispiele der Erfindung näher erläutert. Es zeigt
- Fig. 1: die Anordnung einer berührungslosen Meßeinrichtung in einer Luftfeder,
- Fig. 2: eine Draufsicht auf die Meßfläche des einen, mit dem Magnetfeldsensor ausgestatteten Bauteils,
- Fig. 3: eine modifizierte Ausführungsform einer Magnetanordnung mit asymmetrischem Magnetfeldsensor,
- Fig. 4: das grundlegende Prinzip der Meßeinrichtung,
- Fig. 5: ein Blockschaltbild der Sensorschaltung.

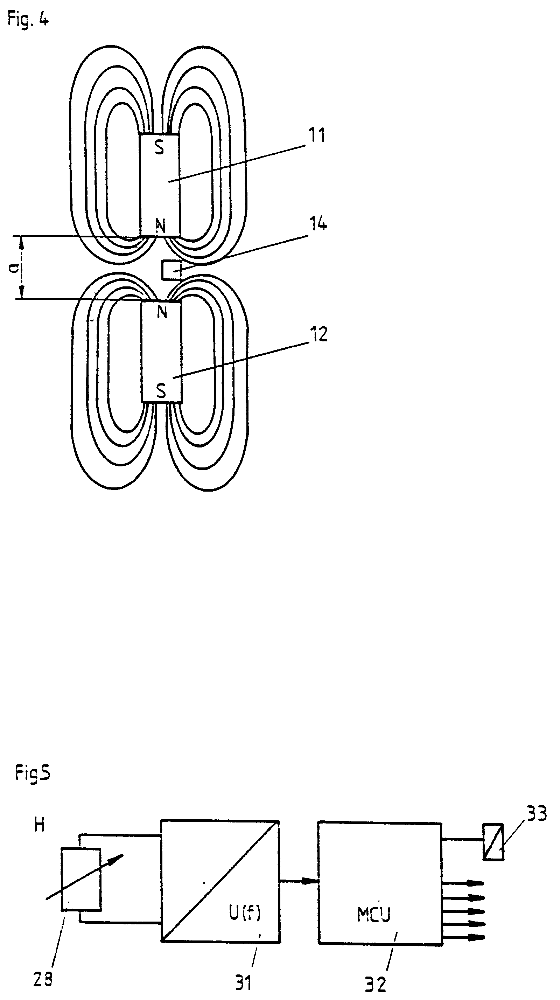

In der Fig. 4 ist das der berührungslosen Abstandsmeßeinrichtung zugrundeliegende physikalische Prinzip in vereinfachter Form dargestellt. Zwei Permanentmagnete 11 und 12 sind derart angeordnet, daß sie sich mit gleicher magnetischer Polung gegenüberstehen und sich so eine Abstoßung ihrer magnetischen Feldlinien ergibt. Ein innerhalb der Feldlinien asymmetrisch angeordneter Magnetfeldsensor 14 ermöglicht die Erfassung der Magnetfeldintensität an seiner Position. Wird nun der Abstand a zwischen den Permanentmagneten 11 und 12 verändert, so ändert sich auch die Intensität der überlagerten Feldlinien am Magnetfeldsensor 14. Diese Änderung der Intensität wird vom Magnetfeldsensor 14 erfaßt und als elektrische Größe zur Gewinnung eines Steuersignals einer später noch erläuterten Signalverarbeitung zugeführt. Die Änderung der Magnetfeldintensität ist proportional zur Änderung des Abstandes a zwischen den Permanentmagneten 11 und 12.

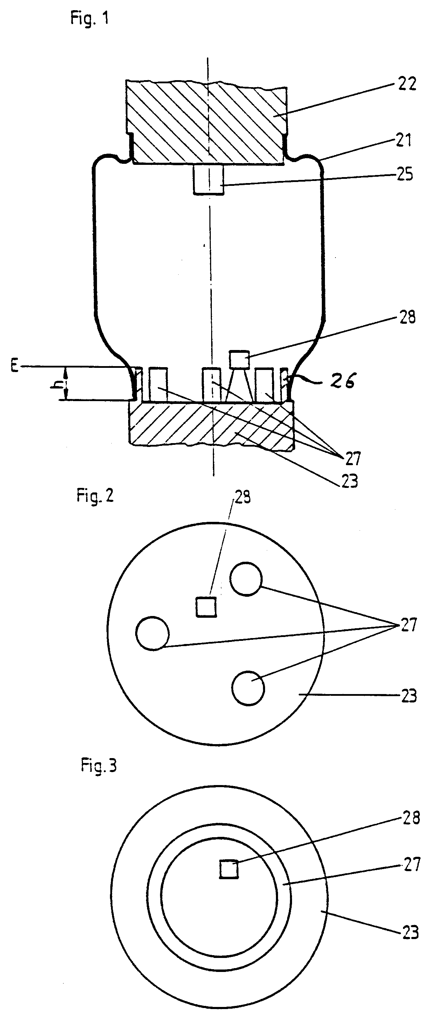

In Fig. 1 wird eine Luftfeder mit einem Rollbalg 21 aus elastomerem Werkstoff gezeigt. Der Rollbalg 21 ist beidendig an zwei relativ zueinander beweglichen Bauteilen 22 und 23 dicht eingespannt. Zur Abfederung der Massen gegeneinander steht der Luftfederbalg 21 in üblicher Weise unter einem Überdruck. Der zwischen den Bauteilen 22, 23 vorhandene Abstand soll konstant gehalten werden. Dieses wird durch die Ansteuerung eines Höhenregelventils bewirkt, das die Luftzufuhr bzw. -abfuhr zum Luftfederbalg 21 regelt.

Auf der Stirnfläche eines als Abrollkolben ausgebildeten Bauteils 22 befindet sich ein zentrisch angeordneter Permanentmagnet 25. Das gegenüberliegende Bauteil 23 weist auf seiner Stirnfläche einen Rand 26 auf, der eine Kreisfläche begrenzt, in der gleichmäßig zueinander drei Permanentmagnete 27 angeordnet sind. Ein Magnetfeldsensor 28 ist asymmetrisch innerhalb des von den drei Permanentmagneten 27 gebildeten Dreiecks angeordnet. Die Polung der Permanentmagnete 25, 27 des Abrollkolbens 22 und des anderen Bauteils 23 sind wie in der Fig. 4 dargestellt ausgeführt.

Der Magnetfeldsensor 28 ist oberhalb der Feldlinienaustrittsebene E der Permanentmagnete 27 angeordnet, um eine Sensierung in dem durch den sich ändernden Abstand zwischen den Bauteilen 22 und 23 stark veränderlichen Feldlinienbereich zu gewährleisten. Die gewählte Position des Magnetfeldsensors 28 innerhalb der überlagerten Feldlinien der gleichsinnigen Permanentmagneten 27 führt zu einer Abschirmung des Magnetfeldsensors 28 vor äußeren magnetischen Störeinflüssen und sorgt so für eine hohe Störfestigksit des Systems. Außerdem bewirkt die asymmetrische Anordnung des Magentfeldsensors 28, daß auch bei Abstandsveränderungen mit einem seitlichen Versatz von der Symmetrieachse immer eine Feldlinienüberlagerung im Sensorpunkt stattfindet, die sich als Feldlinienintensitätsänderung auswerten läßt.

In der Fig. 3 wird die Magnetanordung auf dem Bauteil 23 als ringförmiger Permanentmagnet dargestellt, in dessen Kreis der Magnetfeldsensor 28 asymmetrisch angeordnet ist.

Der Permanentmagnet 27 ist hierbei parallel zur Hochachse magnetisiert, die in Fig. 3 senkrecht zu der Zeichnungsebene verläuft.

Der Magnetfeldsensor 28 kann verschiedene Ausführungsformen haben. Es kann eine Feldplatte, ein Hallgenerator, ein Reluctance Sensor oder ein Fluxgate-Magnetfeldsensor zur Anwendung kommen. Dabei kann der Magnetfeldsensor 28 auf einem Mikrochip (integrierter Schaltkreis) vorhanden sein und der Mikrochip gleichzeitig die Signalvorverarbeitung aufnehmen.

In der Fig. 5 wird die Signalverarbeitung der Meßeinrichtung dargestellt. In der an das Sensorelement 28 angeschlossenen Vorverarbeitung 31 wird die umgekehrt wegproportionale magnetische Feldstärke H in eine Spannung U oder ein Rechtecksignal mit der Frequenz f umgewandelt. Dieses Signal wird dann von einem Mikrocontroller (MCU) 32 in entsprechende Steuersignale für die Magnetventile 33 und den Luftkompressor umgesetzt, so daß eine Abstandsänderung zwischen den relativ zueinander beweglichen Bauteilen 22 und 23 durch Luftzu- oder -abfuhr wieder ausgeglichen wird.

## Patentansprüche

1. Meßeinrichtung mit einem Magnetfeldsensor zum berührungslosen Erfassen des Abstandes zwischen zwei relativ zueinander beweglichen Bauteilen,
**dadurch gekennzeichnet,**
daß ein Bauteil (22) mindestens einen Magneten (25) aufweist,
daß das andere Bauteil (23) den Magnetfeldsensor (28) aufweist, der von einer Magnetanordnung (27) umgeben und asymmetrisch zu dieser angeordnet ist,
daß der Magnetfeldsensor (28) oberhalb der Austrittsebene (E) der Feldlinien der Magnetanordnung (27) angeordnet ist,
daß die vom Magnetfeldsensor (28) erfaßten Änderungen des Magnetfeldes in einer Signalverarbeitung (31, 32) in ein proportionales elektrisches Steuersignal umgewandelt werden.

2. Meßeinrichtung nach Anspruch 1, dadurch gekennzeichnet, daß die den asymmetrischen Magnetfeldsensor (28) umfassende Magnetanordnung (27) aus einem geschlossenen Ring besteht.

3. Verwendung einer Meßeinrichtung gemäß Anspruch 1 zur berührungslosen Abstandssensierung zwischen Fahrzeugachse und Fahrzeugaufbau eines Kraftfahrzeuges.

4. Verwendung einer Meßeinrichtung gemäß Anspruch 1 zur berührungslosen Abstandssensierung der Anschlußteile (22, 23) eines elastomeren Luftfederbalges (21) einer Luftfeder.

5. Luftfeder mit einer Meßeinrichtung gemäß Anspruch 1 und Anspruch 4, dadurch gekennzeichnet, daß die Magnetanordnungen (25, 27) der gegeneinander abzufedernden Anschlußteile (22, 23) und der Magnetfeldsensor (28) im Luftfederbalg (21) an den Anschlußteilen (22, 23) angeordnet sind.
